# EUROPEAN PATENT APPLICATION

(11) **EP 1 521 491 A2**
(43) Date of publication of application: **06.04.2005**
(21) Application number: 04023338.9
(22) Date of filing: 30.09.2004
(51) Int. Cl.: H04Q 7/38

(54) **Control method for a wireless communication system, wireless communication device, base station and authentication device in the communication system**

(30) Priority: 01.10.2003 JP 2003343299
(71) Applicant: NEC CORPORATION, Tokyo (JP)
(72) Inventor: Watanabe, Hiroaki, Tokyo (JP)
(74) Representative: Glawe. Delfs. Moll

(57) **Abstract**

A wireless communication device in a communication system comprises: a controller which receives authentication information from the first base station, the authentication information being based on a first authentication process, the first authentication process being necessary for the wireless communication device to initiate a communication with the network via the first base station; and a memory coupled to the controller,whichstoresthe authentication information received by the controller.

## Description

### BACKGROUND OF THE INVENTION

The present invention relates to a control method for a wireless communication system, a wireless communication device, base station, and an authentication device in a communication system in which wireless communication devices communicate with a network through wireless communication.

Recent advances in wireless communication technology have spurred the widespread use of wireless access systems using wireless communications, such as wireless local area networks (wireless LANs) and mobile phones. These wireless access systems are being deployed in public networks, such as intranets and home networks, as well as in private networks.

While wireless access systems have the advantage of high user mobility in network communication, they have drawbacks that they are vulnerable to interceptions and identity thefts compared with cable access system. Therefore, security measures are more important in wireless access systems than in cable access systems.

Security measures in wireless access systems will be described below by using a wireless LAN access system as an example.

The wireless LAN access system comprises a network, base stations, an authentication server, and mobile terminals. The network is a cable network such as a LAN that is connected to the Internet. The term network as used herein refers to a network including non-base-station communication devices on the network and other networks. The base stations are connected to the network and the authentication server.

The authentication server authenticates mobile terminals to grant them access to the network. A mobile terminal is a communication terminal used by a user. The mobile terminal communicates wirelessly with a base station and communicates with a network, the authentication server, and other mobile terminals through a base station. The geographical coverage in which mobile terminals can communicate with a base station wirelessly is called a wireless access service area.

A standard specification for wireless LAN access systems has been developed by the IEEE (Institute of Electrical and Electronics Engineers) 802 Working Group and is called IEEE 802.11 (ANSI/IEEE std 802.11, 1999 Edition, Local and metropolitan area networks Specific requirements Part 11: Wireless LAN Medium Access Control (MAC) and Physical Layer (PHY) Specifications). IEEE 802.11 mainly defines specifications for LAN connection between a mobile terminal and a base station or between base stations in a wireless space; vulnerability of its security specifications has been often pointed out.

In order to alleviate the vulnerability of the security specifications in the IEEE 802.11, the IEEE 802 Working Group has defined a security technology standard called IEEE 802.1X (IEEE 802.1X, Standards for Local and Metropolitan Area Networks: Standard for Port based Network Access Control). IEEE 802.1X has been developed as authentication technology specification for communication devices that share a wired LAN medium to connect with one another. An association called the Wi-Fi Alliance has defined a standard named WPA (Wi-Fi Protected Access), which extends IEEE 802.1X to wireless LANs (Wi-Fi Protected Access (WPA), Version 1.2). All of these specifications are widely used as standards for mobile terminal authentication methods and procedures, among other security measures for wireless LAN access.

Authentication of mobile terminals according to IEEE 802.1X and WPA will be described below. A mobile terminal associates to any of the base stations on a network in order to initiate communication with the network (corresponding to the Association in IEEE 802.11). When detecting the association of the mobile terminal, the base station asks an authentication server whether the mobile terminal that has associated should be allowed to connect the network. If the authentication server determines based on identification information registered beforehand that the mobile terminal is authorized, the authentication server sends an authentication complete or authentication success message to the mobile terminal through the base station. The base station opens a communication port to the authenticated mobile terminal. After the authentication success, the mobile terminal starts communication with the network through the base station.

The mobile terminal authentication described above involves exchanging a number of items of information among the mobile terminal, base station, and authentication server. If the authentication server is located at a site geographically distant from the base station on the network, these items of information are exchanged by cable or wireless. In that case, a considerable period of authentication process time between the initiation and completion of authentication is required due to transmission delay in communication and process delay in the devices and station. Furthermore, when communication traffic is high, the transmission delay increases and the authentication process time becomes longer because information relating to authentication is given the same priority as that of other communication traffic. The mobile terminal is not permitted to connect to the network and accordingly cannot communicate with the network until the authentication process completes. Consequently, such a prolonged authentication process period of time causes the following problems.

Firstly, a communication quality problem arises during a handover. Consider a case in which a mobile terminal connects to a network while moving. The mobile terminal is moving from a wireless access service area of a base station to which the mobile terminal is associated to a wireless access service area of another base station. In doing so, the mobile terminal must perform switching its association to the new base station, that is, it must perform a handover. During the handover, the mobile terminal disassociates from the base station with which it is associated and newly associates to the base station to which it is moving. According to IEEE 802.1X or WPA, the mobile terminal performs an authentication process with the authentication server through the base station to which it is moving. Communication between the mobile terminal and the network is interrupted in the physical layer of a communication protocol during the time required for the authentication process, in addition to the time required for the handover itself, that is, the time required for switching the association.

Communication interruption in the physical layer during the period of time required for the handover itself typically can be compensated by means of a function of a higher level of a communication protocol and is not recognized by the parties to the communication. However, communication interruption in the physical layer during the authentication process can be too long to be compensated in an upper layer. For example, if the mobile terminal is performing communication in which data such as audio or video data that requires continuity and real-time processing is handled, authentication associated with a handover degrades the communication quality in an upper layer. In the worst case, communication in the upper layer will also be disconnected.

Secondly, there is another problem that when the mobile terminal disassociates from a base station and then re-associates to the same base station, the authentication process described above must be performed. It is inconvenient for the user of the mobile terminal that communication with the network cannot be started until the authentication process as described above is completed, in order merely to re-associate to the base station with which the authorized mobile terminal has been associated.

To solve these problems, authentication process time must be reduced. Furthermore, considering the nature of wireless access systems, sufficient security must be ensured, in addition to just reducing authentication processing time. Moreover, given that IEEE 802.1 and WPA are widely used as standards, the above-describe problems must be solved by using a method compatible with IEEE 802.1X- or WPA-based systems. In order to address these problems, the following prior-art technologies have been proposed.

For example, Japanese Patent Laid-Open No. 6-261043, No. 2003-5641, No. 2003-101545, and No. 2002-198971 disclose methods in which no authentication server is used but identification information about all mobile terminals that can associate to base stations is maintained at the base stations and each of the base station performs authentication of mobile terminals. According to the methods disclosed in these patent documents, authentication process time can be reduced compared with the methods according to IEEE 802.1X and WPA because authentication can be performed simply by exchanging information between a base station and a mobile terminal.

However, the methods disclosed in these patent documents have the following problem. The amount of identification information will be huge in a wireless access system in which a number of base stations are provided and a large number of mobile terminals have wireless access in a wide geographical area. Furthermore, for improving security or when a mobile terminal having access is added or deleted, updates, addition, and deletion of identification information must be performed for all base stations while the system is operating. Therefore, the methods in which authentication is performed at base stations have the problem that they require too much costs/labor for implementing/managing the system. Another problem with the methods disclosed in these patent documents is that they are incompatible with systems based on IEEE 802.1X or WPA, which is a standard specification, because they do not use an authentication server.

Japanese National Publication of International Patent Application No. 2003-516000 discloses a method in which identification information is transferred from a base station with which a mobile terminal is associated before a handover to a base station to which the mobile terminal will associate after the handover and the base station performs authentication of the mobile terminal without using an authentication server. According to the method disclosed in Japanese National Publication of International Patent Application No. 2003-516000, process delay and transmission delay which would be caused by the involvement by an authentication server can be avoided and consequently the authentication process time is short compared with the IEEE 802.1X and WPA methods.

However, the method disclosed in Japanese National Publication of International Patent Application No. 2003-516000 has a problem that authentication process time cannot be effectively reduced because communication for information exchange takes place between the base station with which the mobile terminal is associated before the handover and the base station to which the mobile terminal is to associate after the handover. Another problemwith the method disclosed in National Publication of International Patent Application No. 2003-516000 is that it is incompatible with systems that based on IEEE 802.1X or WPA, which is a standard specification because it does not use an authentication server.

Japanese Patent Laid-Open No. 2003-60653 discloses a method for authentication performed during a handover in a wireless LAN access system. Japanese Patent Laid-Open No. 2001-144812 discloses a simplified authentication method. Japanese Patent Laid-Open No. 2001-111544 discloses an authentication method with high-level security. Japanese Patent Laid-Open No. 2003-60653, No. 2001-144812, and No. 2001-111544 provide authentication methods that always use an authentication server even for reconnection to a network as an association switching and do not solve the authentication process time problems described above.

### BRIEF SUMMARY OF THE INVENTION

Awireless communication device in a communication system comprises: a controller which receives authentication information from the first base station, the authentication information being based on a first authentication process, the first authentication process being necessary for the wireless communication device to initiate a communication with the network via the first base station; and a memory coupled to the controller, which stores the authentication information received by the controller.

A base station in a communication system comprises: a wireless transmission and reception means for communicating with the wireless communication device via wireless communication; and a controlling means for sending authentication information to the wireless communication device, the authentication information being to be stored in wireless communication device and being based on the first authentication process, the first authentication process being necessary for the wireless communication device to initiate the communication between the wireless communication device and the network via the base station.

An authentication device in a communication system comprises: a transmission and reception means for communicating with the base station; and a controlling means for sending authentication information to the wireless communication device via the base station, the authentication information being to be stored in the wireless communication device and being based on the first authentication process, the first authentication process is necessary for the wireless communication device to initiate the communication with the network via the base station.

### BRIEF DESCRIPTION OF THE DRAWINGS

This above-mentioned and other objects, features and advantages of this invention will become more apparent by reference to the following detailed description of the invention taken in conjunction with the accompanying drawings, wherein:
FIG. 1 shows a configuration of a wireless access system according to a first embodiment of the present invention;
FIG. 2 shows a configuration of a mobile terminal according to the first and a second embodiment of the present invention;
FIG. 3 shows a configuration of a base station according to the first embodiment of the present invention;
FIG. 4 shows a configuration of an authentication server according to the first embodiment of the present invention;
FIG. 5 shows an operation for distributing an authentication ticket according to the first embodiment of the present invention;
FIG. 6 shows a structure of the authentication ticket according to the first embodiment of the present invention;
FIG. 7 shows an authentication process using the authentication ticket according to the first embodiment of the present invention;
FIG. 8 shows an authentication process using the authentication ticket with an additional authentication according to the first embodiment of the present invention;
FIG. 9 shows an operation performed when the authentication ticket becomes invalid according to the first embodiment of the present invention;
FIG. 10 shows a configuration of a wireless access system according to a second embodiment of the present invention;
FIG. 11 shows a configuration of a base station according to the second embodiment of the present invention;
FIG. 12 shows an operation for distributing an authentication ticket according to the second embodiment of the present invention;
FIG. 13 shows a structure of the authentication ticket according to the second embodiment of the present invention; and
FIG. 14 shows an authentication process using the authentication ticket according to the second embodiment of the present invention.

### DETAILED DESCRIPTION OF THE PREFERRED EMBODIMENTS

The best modes for embodying the present invention will be described with reference to the accompanying drawings. However, such embodiments are not intended to limit the technical scope of the present invention.

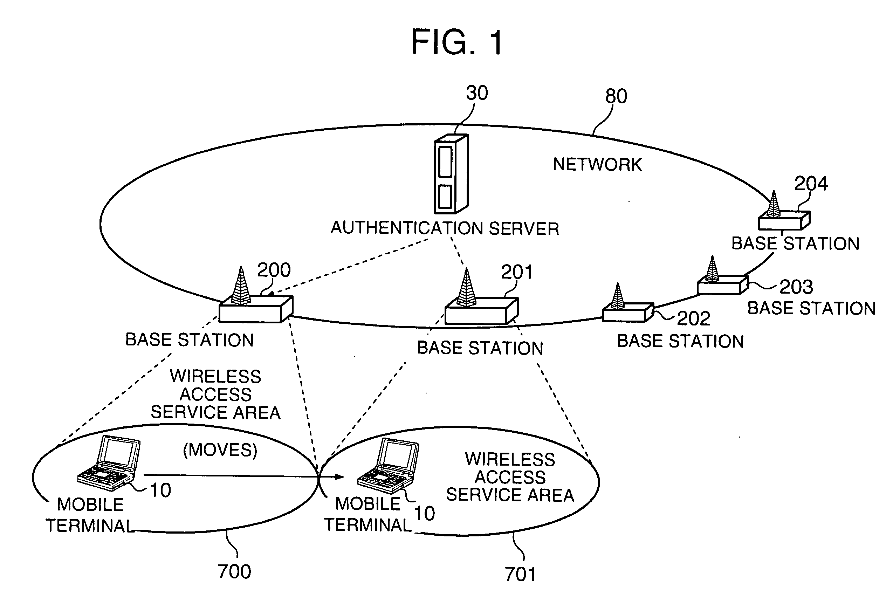

FIG. 1 shows a configuration of a wireless access system according to a first embodiment of the present invention. Only those components that are required for illustrating the first embodiment of the present invention are shown in FIG. 1.

The wireless access system according to the first embodiment of the present invention is a wireless LAN access system including mobile terminals 10, base stations 200 - 204, a network 80, and an authentication server 30.

The network 80 is a cable network such as a LAN connected to the Internet. The term network as used herein refers to a network including communication devices on the network 80 and other networks.

The base stations 200 - 204 are connected to the network 80 and the authentication server 30 and perform two-way cable communication. Each of the base stations 200 - 204 has a wireless access service area in which it provides wireless communication with mobile terminals 10. In the first embodiment, base stations 200 and 201 correspond to wireless access service areas 700 and 701, respectively.

A mobile terminal 10 associates to a base station of a wireless access area to which it belongs (corresponding to the Association in IEEE 802.11) and communicates with the network 80 and the authentication server 30 via wireless communication with that base station. Communicating with the network 80 means communicating with a communication device on the network 80 or on another network connected to the network 80. Communication devices on the network 80 or on another network connected to the network 80 include other mobile terminals that, like mobile terminal 10, communicate with the network 80 through a base station.

A mobile terminal 10 can move across wireless access areas of different base stations. In such a case, themobile terminal 10 can continue communicating with network 80 by associating to a new base station, that is, by performing a handover. For example, when a mobile terminal 10 moves from wireless access service area 700 to wireless access service area 701 as shown in FIG. 1, it performs a handover to disassociate from base station 200 and associate to base station 201.

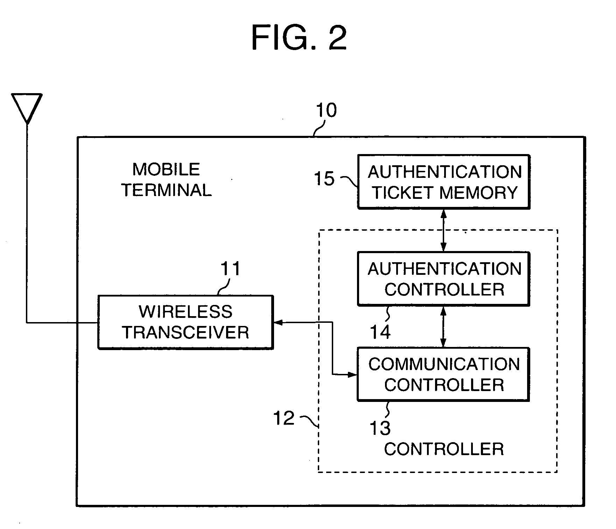

FIG. 2 shows a configuration of a mobile terminal 10 according to the first embodiment of the present invention. Only those components that are required for illustrating the first embodiment are shown. The mobile terminal 10 is a wireless communication device including a wireless transceiver 11, a controller 12, and an authentication ticket memory 15. The wireless transceiver 11 downconverts the frequency of a radio signal received from a base station, applies A/D conversion and demodulation to the resulting signal, and sends it to the controller 12. The wireless transceiver 11 also modulates a signal received from the controller 12, applies D/A conversion to the modulated signal, upconverts its frequency, and sends it to a base station as a radio signal. The controller 12 comprises a communication controller 13 and an authentication controller 14. The communication controller 13 sends and receives signals to and from the wireless transceiver 11. The communication controller 13 detects a radio wave reception limit point which is a marginal point beyond which successful communication between the mobile terminal 10 and a base station with which the mobile terminal 10 is associated cannot be performed. Furthermore, the communication controller 13 searches for the nearest base station. A radio wave reception limit point is detected based on a decrease in the intensity of a received radio wave or a rise in signal error rate. A base station is searched for by using an active or passive scan specified in IEEE 802.11. The authentication controller 14 sends and receives signals to and from the communication controller 13 and performs an authentication with the authentication server 30, an authentication with a base station, and an association to and a disassociation from a base station. The association and disassociation herein are performed according to specifications in IEEE 802.11. The authentication ticket memory 15 receives/sends a signal from/to the authentication controller 14 and stores an authentication ticket or sends an authentication ticket to the authentication controller 14 in response to a request from the authentication controller 14. The authentication ticket will be described in detail later.

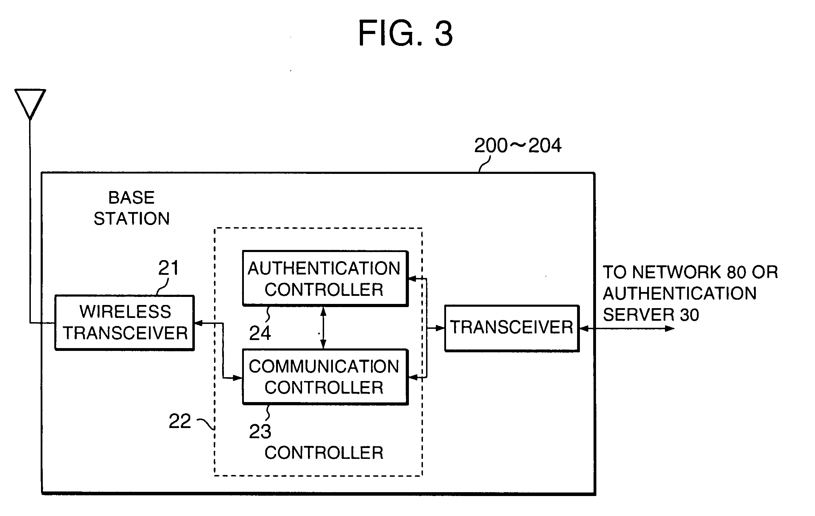

FIG. 3 shows a configuration of the base stations 200 - 204 according to the first embodiment of the present invention. Only those components required for illustrating the first embodiment are shown. The base stations 200 - 204 are an access point in a wireless LAN access system which includes a wireless transceiver 21, a controller 22, and a transceiver 25. The wireless transceiver 21 receives a radio signal from a mobile terminal 10, applies processing such as demodulation to it, and sends it to the controller 22. The wireless transceiver 21 also receives a signal from the controller 22, applies processing such as modulation to it, and sends it to a mobile terminal 10 as a radio signal. The controller 22 comprises a communication controller 23 and an authentication controller 24. The communication controller 23 sends a signal from the wireless transceiver 21 to the authentication controller 24 and the transceiver 25, sends a signal from the transceiver 25 to the authentication controller 24 and the wireless transceiver 21, and sends a signal from the authentication controller 24 to the wireless transceiver 21 and the transceiver 25. The communication controller 23 also controls whether communication between the mobile terminal 10 and the network 80 should be permitted. The authentication controller 24 sends and receives signals to and from the communication controller 23 and performs processes for authentication, association, and disassociation of the mobile terminal 10. The transceiver 25 modulates a signal from the communication controller 23 and sends it to the network 80 or the authentication server 30. The transceiver 25 also demodulates a signal from the network 80 or the authentication server 30 and sends it to the communication controller 23.

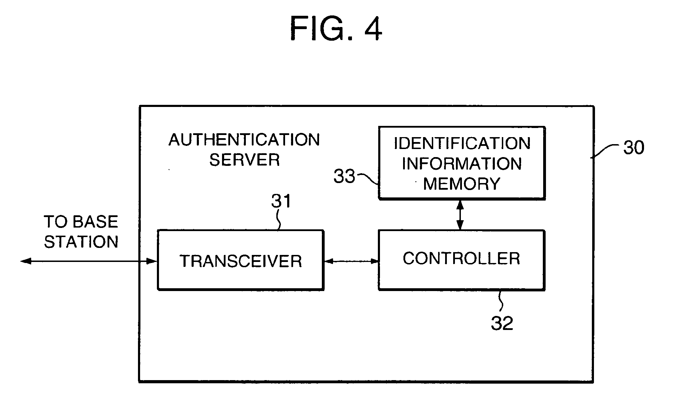

FIG. 4 shows a configuration of an authentication server 30 according to the first embodiment of the present invention. Only those components that are required for illustrating the first embodiment are shown. The authentication server 30 is an authentication device including a transceiver 31, a controller 32, and identification information memory 33 and having the function of authenticating mobile terminals. The transceiver 31 receives a signal from any of the base stations 200 - 204, demodulates it, and sends the demodulated signal to the controller 32. The transceiver 31 also modulates a signal from the controller 32 and sends the modulated signal to any of the base stations 200 - 204. The identification information memory 33 stores preset identification information about mobile terminals 10. The controller 32 sends and receives signals to and from the transceiver 31 and performs authentication of a mobile terminal 10 through any of the base stations 200 - 204. The authentication is performed based on identification information stored in the identification information memory 33. The controller 32 also sends an authentication ticket to mobile terminals 10 through any of the base stations 200 - 204. The authentication ticket will be detailed later.

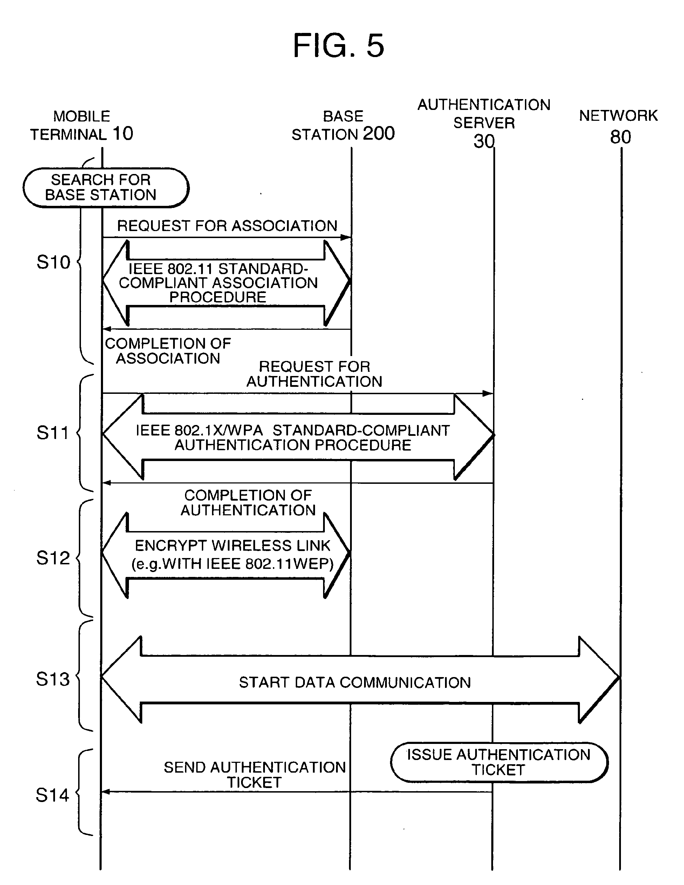

An operation according to the first embodiment of the present invention will be described in detail below. FIG. 5 shows operations performed when a mobile terminal 10 associated with no base station associates to base station 200 and starts data communication with a network 80.

The communication controller 13 of the mobile terminal 10 searches the base station nearest to the location of the mobile terminal 10 and determines to associate to the base station 200. The authentication controller 14 sends a request for association to the base station 200 and performs an association procedure with the authentication controller 24 of the base station 200. After the completion of the association procedure, mobile terminal 10 is associated with the base station 200. The base station search and association procedure are performed in compliance with specifications in IEEE 802.11 (S10).

Association to the base station 200 is not sufficient for the mobile terminal 10 to be permitted to communicate with the network 80. Specifically, the communication controller 23 of base station 200 prevents the mobile terminal 10 from communicating with the network 80. Therefore, the mobile terminal 10 performs an authentication process with the authentication server 30 through the base station 200 in order to start the data communication described above. Specifically, the authentication controller 24 of the base station 200 which has recognized the association of the mobile station 10 requests authentication from the controller 32 of the authentication server 30. Then, the authentication process is performed between the authentication controller 14 of the mobile terminal 10 and the controller 32 of the authentication server 30 through the base station 200. The authentication process is performed based on identification information about the mobile terminal 10 which is preset and stored in the identification information memory 33 of the authentication server 30. The authentication process is in conformity with specifications in IEEE 802.1X or WPA. (S11).

If the authentication succeeds, that is, the validity of the mobile terminal 10 is verified by the authentication server 30, a wireless communication link between the mobile terminal 10 and the base station 200 is encrypted. Specifically, the mobile terminal 10 receives a cryptographic key according to a key distribution protocol defined in IEEE 802.1X or WPA or uses a cryptographic key preset manually in the mobile terminal 10 and the base station 200 to encrypt the wireless communication link. WEP encryption specified in IEEE 802.11 can be used as the encryption (S12).

After the completion of the encryption, communication between the mobile terminal 10 and the network 80 is permitted by the communication controller 23 of the base station 200 and the communication starts. After the communication between the mobile terminal 10 and the network 80 is started (S13), the authentication server 30 issues an authentication ticket and sends it to the mobile terminal 10.

The authentication ticket is authentication information that certifies that the validity of the mobile terminal 10 is authenticated by the authentication server 30 and includes certification information. The authentication ticket also includes encryption information for encrypting itself for transmission. The mobile terminal 10 thus permitted to communicate with the network can use the authentication ticket when it re-associates to the base station to accomplish an authentication process with the base station. Thus, the present invention provides an authentication process that differs from authentication performed by an authentication server and can be completed in a shorter time.

Encryption information required for encrypting an authentication ticket will be hereinafter called a passphrase. According to the first embodiment of the present invention, certification information included in an authentication ticket is a signature of the authentication server.

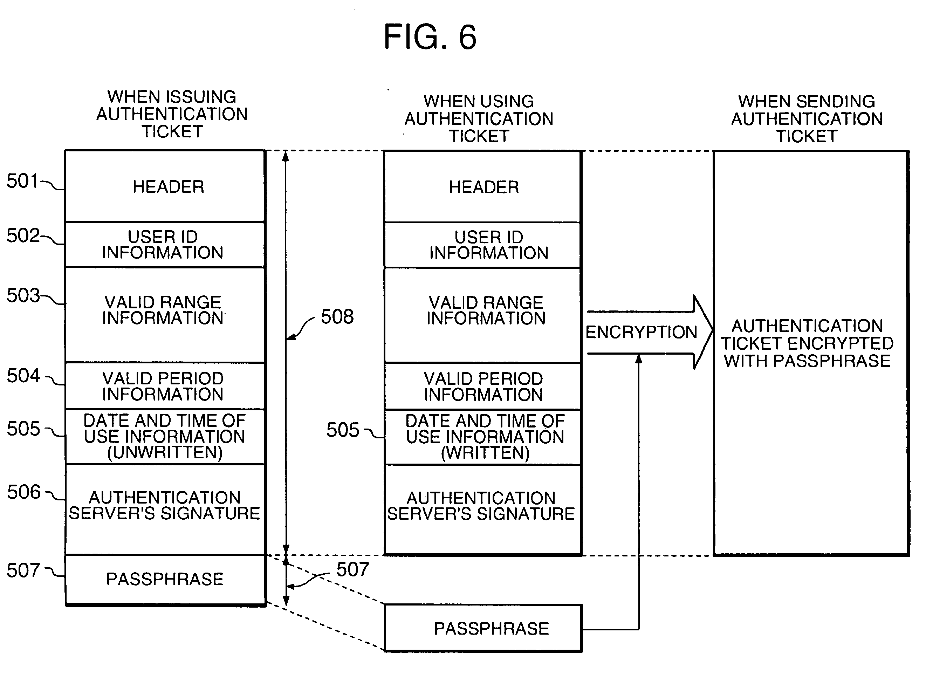

FIG. 6 shows a structure of an authentication ticket sent from the authentication server 30 to a mobile terminal 10. The authentication ticket comprises a header 501, user ID information 502, valid range information 503, valid period information 504, date and time of use information 505, an authentication server's signature 506, and a passphrase 507.

The header 501 is equivalent to a message/packet ID used in a typical communication protocol and facilitates handling of the authentication ticket in a base station. The user ID information 502 indicates the identity of the mobile terminal 10 authenticated by the authentication server 30. The valid range information 503 indicates a range, area, or zone in which the authentication ticket can be used as valid. Preferably the valid range information 503 may be a list of base stations for which the authentication ticket can be used as valid. The valid period information 504 indicates the period for which the authentication ticket is valid. Setting the valid range information 503 and the valid period information 504 according to the size and use of a system can set the level of security. The date and time of use information 505 is time information indicating the time at which the mobile terminal 10 used the authentication ticket, that is, the time at which the mobile terminal 10 sent the authentication ticket to a base station. The authentication server's signature 506 is set by the authentication server 30 when it issues the authentication ticket and indicates the validity of the authentication ticket.

The passphrase 507 is a key for encryption that is applied to the authentication ticket when the mobile terminal 10 sends the authentication ticket to a base station. The passphrase 507 is updated by the authentication server 30 at regular intervals and delivered to all base stations contained in the valid range information 503. According to the present embodiment, the update intervals of the passphrase 507 and the valid period of the authentication ticket are in synchronization; when the authentication ticket expires, the passphrase 507 is updated and delivered. The passphrase 507 is delivered over a secure communication link to the base stations or is encrypted in some way and delivered.

In this example, the date and time at which the mobile terminal 10 sent the authentication ticket to a base station is set as the date and time of use information 505. The components other than the date and time of use information 505, namely, the used ID 502, valid range information 503, valid period information 504, authentication server's signature 506, and passphrase 507 are set by the authentication server 30.

Returning to FIG. 5, distribution and use of the authentication ticket will be described in detail. After communication between the mobile terminal 10 and the network 80 is started, the authentication server 30 sends the authentication ticket to the mobile terminal 10 (S14). Specifically, the controller 32 of the authentication server 30 sends the authentication ticket for which the user ID 502, valid range information 503, valid period information 504, authentication server' s signature 506, and passphrase 507 are set to the authentication controller 14 of the mobile terminal 10. The authentication controller 14 of the mobile terminal 10 checks the authentication server's signature 506 in the authentication ticket it received. If the authentication controller 14 of the mobile terminal 10 determines that the authentication ticket it received is a valid authentication ticket sent from the authentication server 30, then the authentication controller 14 stores it in the authentication ticket memory 15. If the authentication controller 14 of the mobile terminal 10 determines that the authentication ticket it received is an invalid ticket, then it discards the ticket and performs a resend or re-authentication process as appropriate. A case where a valid authentication ticket is stored in the authentication ticket memory 15 will be described below.

While in the first embodiment of the present invention, it is assumed that the authentication ticket is sent after the communication between the mobile terminal 10 and the network 80 is started, an arrangement in which the authentication ticket is sent before the communication is started can be used. Also in that case, interception and unauthorized use of the passphrase 507 associated with the authentication ticket can be prevented by ensuring a secure communication link, such as by encrypting the wireless communication link between the mobile terminal 10 and a base station 200, before the authentication ticket is sent to the mobile terminal 10 over the communication link.

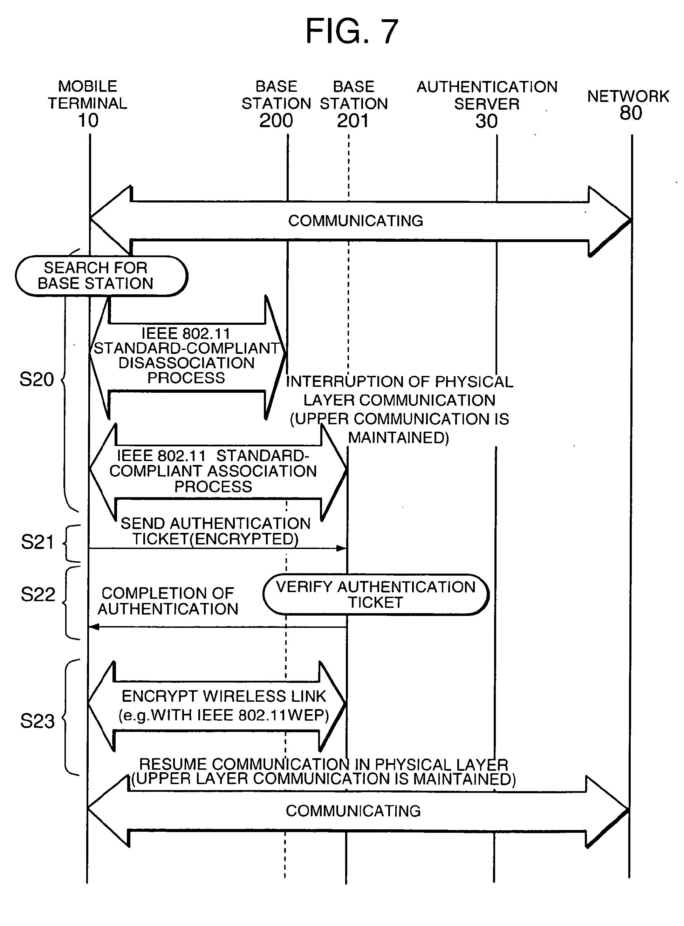

FIG. 7 shows operations performed when a handover takes place in which a mobile terminal 10 that is associated with base station 200 and is communicating with the network 80 switches from base station 200 to base station 201 as the mobile terminal 10 moves.

As shown in FIG. 1, the mobile terminal 10 is moving while maintaining the communication with the network 80. When the mobile terminal 10 comes closer to a radio wave reception limit point of base station 200 with which the mobile terminal 10 is currently associated, that is, a boundary of wireless access service area 700, the mobile terminal 10 again performs a base station search and finds the nearest base station 201. The mobile terminal 10 then performs a handover to change association from base station 200 to base station 201 as the mobile terminal 10 moves from the wireless access area 700 to wireless access area 701.

Specifically, the communication controller 13 of the mobile terminal 10 recognizes that it is in close proximity to a boundary of wireless access area 700 from a drop in the intensity of a received radio wave or a rise in signal error rate. Furthermore, the communication controller 13 searches for a base station, and finds the nearest base station 201. Then, the authentication controller 14 of the mobile terminal 10 accomplishes a disassociation process with the authentication controller 24 of base station 200 when it moves from the wireless access area 700 to wireless access area 701. Then, the authentication controller 14 of the mobile terminal 10 performs an association process with the authentication controller 24 of base station 201 and associates to base station 201. The association process and the disassociation process herein are performed in compliance with specifications in IEEE 802.11 (S20).

At the time when the mobile terminal 10 has completed the disassociation from base station 200, communication between the mobile terminal 10 and the network 80 is maintained in an upper layer of the communication protocol but communication in the physical layer of the communication protocol has been interrupted. When the mobile terminal 10 completes the association process to the new base station 201, the communication in the physical layer has not been resumed. According to authentication specified in IEEE 802.1X and WPA, re-authentication by the authentication server 30 is required in order for the mobile terminal 10 to resume the communication in the physical layer. This would result in interruption in the communication in the upper layer as well because of a prolonged authentication process. According to the first embodiment of the present invention, in contrast, if the mobile terminal 10 has an authentication ticket, that is, an authentication ticket is in its authentication ticket memory 15, an authentication process is performed with a base station 201 based on the authentication ticket, instead of performing an authentication process with the authentication server 30. This can prevent interruption of communication in an upper layer. If the mobile terminal 10 does not have an authentication ticket, re-authentication is performed by the authentication server 30 as shown in FIG. 5. A case where the mobile terminal 10 has an authentication ticket will be described below.

After completing association to base station 201, the mobile terminal 10 sends the authentication ticket 508 excluding the passphrase 507 to base station 201. Specifically, the authentication controller 14 of the mobile terminal 10 reads the authentication ticket 508 from the authentication ticket memory 15 and sets the current date and time in the date and time of use information 505. The authentication controller 14 then reads the passphrase 507 from the authentication ticket memory 15, uses the passphrase 507 to encrypt the authentication ticket 508 in which the used data and time information 505 is set, and sends the encrypted authentication ticket 508 to the authentication controller 24 of base station 201 (S21).

The base station 201 verifies the validity of the authentication ticket it received to perform authentication of the mobile terminal 10. Specifically, the authentication controller 24 of the base station 201 receives the authentication ticket 508 from the mobile terminal 10 and decrypts the authentication ticket 508 by using the passphrase 507 delivered in advance from the authentication server 30. The authentication controller 24 checks the valid range information 503 and the valid period information 504 in the decrypted authentication ticket to determine whether the authentication ticket is valid. The authentication controller 24 also checks the authentication server's signature 506 to determine whether the authentication ticket is a valid one that has been issued by the authentication server 30. The authentication controller 24 also checks the user ID information 502 and the date and time of use information 505 to determine whether or not the authentication ticket is used unauthorizedly. While the authentication ticket is encrypted with the passphrase and sent as described above, it can be obtained and used by an unauthorized malicious person that is not the user of the mobile terminal 10 because it has been sent onto a wireless link. Therefore, such an unauthorizedly used authentication ticket must be precluded. Specifically, ID information, for example the MAC (Medium Access Control) address of the mobile terminal 10 which has been sent from the mobile terminal 10 during the association process is compared with the user ID information 502 to determine whether the user of the authentication ticket matches the associated mobile terminal 10. If they do not match, it can be determined that the authentication ticket has been unauthorizedly used. Furthermore, the date and time at which the authentication ticket has been received can be compared with the date and time of use information 505 to determine whether or not this is an unauthorized use. That is, if the elapsed time between the date and time set in the date and time of use information 505 and the reception of the authentication ticket is not within the range of delay in wireless transmission, it can be determined that this is an unauthorized use by an unauthorized third party who intercepted it (S22).

If it is determined through the procedures described above that the authentication ticket has been used within the valid period and valid range, issued by the authentication server 30, and used by an authorized user, that is, if it is determined that the authentication ticket is entirely valid, then the wireless communication link between the mobile terminal 10 and base station 201 is encrypted. Specifically, the mobile terminal 10 receives a cryptographic key according to a key distribution protocol defined in IEEE 802.1X or WPA or uses a cryptographic key manually preset in the mobile terminal 10 and base station 201 to encrypt the wireless communication link. For example, the WEP encryption specified in IEEE 802. 11 may be used for the encryption. After the completion of the encryption, the authentication controller 24 of base station 201 sends a notification indicating that communication with the network 80 is permitted to the authentication controller 14 of the mobile terminal 10. At the same time, the communication controller 23 of base station 201 opens a communication port between the mobile terminal 10 and the network 80. The mobile terminal 10 received the notification of permission of the communication and resumes the communication with the network 80 in the physical layer (S23). It should be noted that because the interruption of communication in the physical layer in the period from step S20 to S23 is short, communication in the upper layer has been maintained.

If the validity of the authentication ticket cannot be determined, then the wireless communication link is not encrypted, the authentication controller 24 does not send the notification of permission of communication, and the communication controller 23 does not open the communication port between the mobile terminal 10 and the network 80. In that case, re-authentication by the authentication server 30 is required.

Although the encryption of the wireless communication link is performed after the authentication based on the authentication ticket, a high level of security can be ensured because the authentication ticket is encrypted with a pass phrase. Alternatively, authentication based on the authentication ticket may be performed after the wireless communication link between the mobile terminal 10 and base station 201 is encrypted.

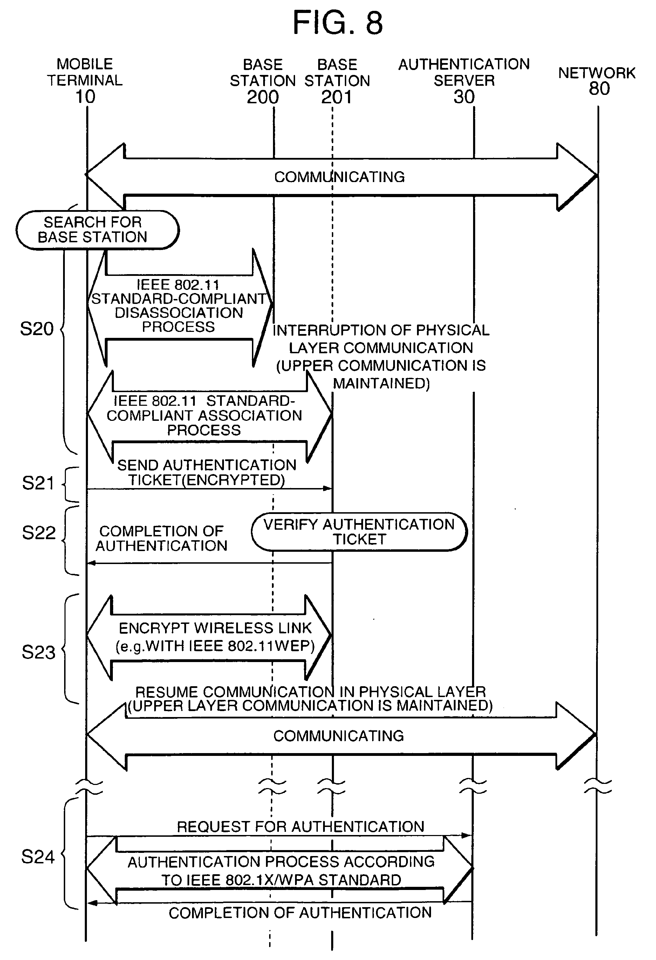

Preferably, as shown in FIG. 8, after the communication between the mobile terminal 10 and the network 80 in the physical layer is resumed, the mobile terminal 10 may perform an additional authentication process with the authentication server 30 through base station 21 concurrently with the communication. The steps s20 to s23 shown in FIG. 8 are identical with those shown in FIG. 7. The additional authentication process is the same as that shown in FIG. 5 and is performed in compliance specifications in IEEE 802.1X or WPA (S24). If the additional authentication succeeds, the communication between the mobile terminal 10 and the network 80 which is being performed concurrently with the additional authentication is maintained. On the other hand, if the additional authentication fails, the communication between the mobile terminal 10 and the network 80 is halted by the communication controller 23 of base station 201. The additional authentication is measures for avoiding an unauthorized use of an authentication ticket that cannot be precluded by checking the user ID information 502 and the date and time of use information 505, thereby further improving the level of security. For example, if a person who illegally obtained an authentication ticket uses an authentication ticket in a short time after the date and time set in the date and time of use information 505 under the name of the authorized user of the ticket, base station 202 may treat the authentication ticket as valid. Additional authentication can preclude such an unauthorized use of an authentication ticket that cannot be verified by base station 202.

The mobile terminal 10 performs steps S20 to S23 or, preferably steps s20 to s24 each time it performs a handover as it moves.

According to the first embodiment of the present invention, the authentication server 30 does not send an authentication ticket to themobile terminal 10 for additional authentication. Alternatively, a new authentication ticket may be issued after additional authentication succeeds, as appropriate.

The use of authentication ticket during a handover in which a mobile terminal 10 changes a base station has been described above. The authentication process shown in FIG. 7 in which an authentication ticket is used is also applicable to a case where a mobile terminal 10 associated with no base station associates to any of the base stations. For example, consider a case where a mobile terminal 10 associated with bases station 200 has disassociated from base station 200 after the authentication server 30 sends an authentication ticket to the mobile terminal 10. If the mobile terminal re-associates to base station 200, the mobile terminal 10 can start communication with the network 80 by performing the authentication process shown in FIG. 7 in which an authentication ticket is used, instead of performing an authentication process with the authentication server 30.

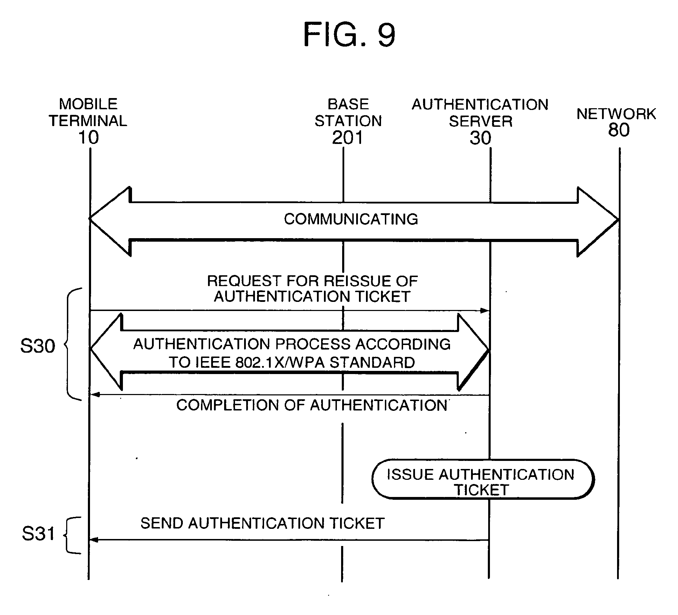

Operations in a case where an authentication ticket of a mobile terminal 10 has become invalid while the mobile terminal 10 is communicating in a location where a handover is not required, that is, in a wireless access service area and not in close proximity to its boundary. FIG. 9 illustrates operation in a case where an authentication ticket of a mobile terminal 10 has become invalid while the mobile terminal 10 is communicating with the network 80 in wireless access service area 701 of base station 201.

An authentication ticket becomes invalid when the base station with which the mobile terminal 10 is currently associated or to which it is to associate in the next handover is no longer or not included in the valid range set in the valid range information 503 or the valid period set in the valid period information 504 has expired. The mobile terminal 10 can know that the authentication ticket has become invalid due to a cause that comes from the valid range information 503 by recognizing identification information of the base station with which it is currently associated and the next base station to which it is to associate. It also can know that the authentication ticket has become invalid due to a cause that comes from the valid period information 504 by comparing the valid period set in the valid period information 504 with the current date and time.

The mobile terminal 10 checks the validity of the authentication ticket at regular intervals or with some other timing. If the mobile terminal 10 determines that the authentication ticket is invalid, it requests the authentication server 30 to reissue the authentication ticket. The authentication server 30 receives the request and executes a re-authentication process with the mobile terminal 10, validates the mobile terminal 10, then reissues and sends again the authentication ticket to the mobile terminal 10. Specifically, the authentication controller 14 of the mobile terminal 10 accesses its authentication ticket memory 15 at regular intervals or with some other timing to determine at that time whether the authentication ticket is valid yet. If the authentication ticket is no longer valid, the authentication controller 14 requests the controller 32 of the authentication server 30 to reissue the authentication ticket through base station 201. The controller 32 of the authentication server 30 receives the request for reissue of the authentication ticket and performs a re-authentication process with the authentication controller 14 of the mobile terminal 10. The re-authentication process is similar to the authentication process in S11 (FIG. 5) and performed in compliance with specifications in IEEE 802.1X or WPA (S30). After the re-authentication is completed and the validity of the mobile terminal 10 is recognized, the controller 32 of the authentication server 30 reissues and sends the authentication ticket to the authentication controller 14 of the mobile terminal 10. The authentication controller 14 of the wireless communication device 10 receives the reissued authentication ticket, verifies the validity of the authentication ticket and stores it in the authentication ticket memory 15 just as it did when receiving authentication ticket at step S14 (FIG. 5). The invalid old authentication ticket is discarded (S31).

Steps S30 and S31 described above are performed concurrently with communication between the mobile terminal 10 and the network 80. Accordingly, the authentication ticket can be updated without interrupting the communication. When the mobile terminal 10 subsequently associates to the base station, it uses the redistributed new authentication ticket to perform an authentication process with the base station. If the authentication becomes invalid again, steps S30 and S31 described above will be performed.

While the wireless LAN access system is used as a wireless access system in the first embodiment of the present invention, any other systems can also be used that, like the system described above, include mobile terminals, base stations, an authentication server, and a network. For example, systems such as mobile phone communication systems and PHS (Personal Handyphone System) communication system can be used.

While a single authentication server is used in the first embodiment of the present invention, a wireless access system can be configured with more than one authentication server.

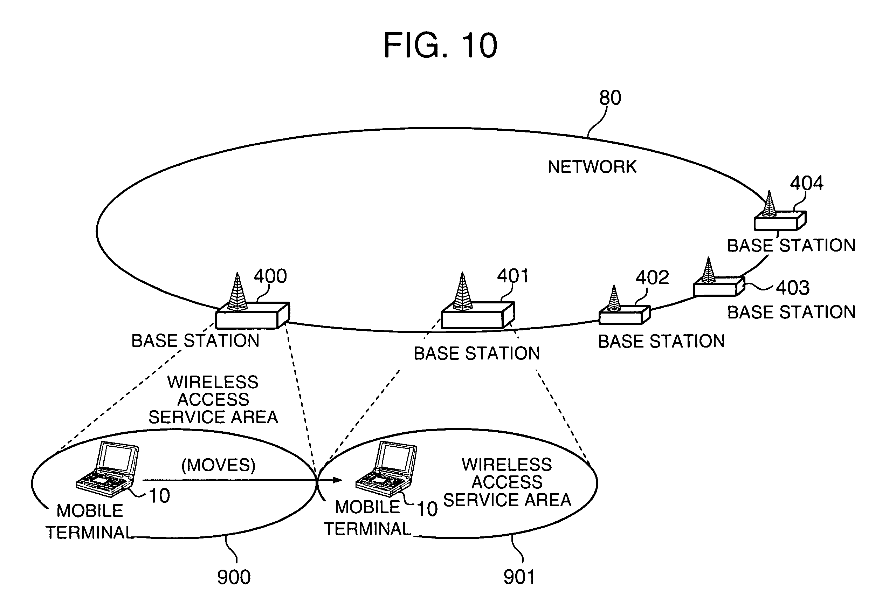

FIG. 10 shows a configuration of a wireless access system according to a second embodiment of the present invention. Only those components that are required for illustrating the second embodiment of the present invention are shown. The wireless access system according to the second embodiment of the present invention is a wireless LAN access system that includes mobile terminals 10, base stations 400 - 404, and a network 80. The wireless access system of the second embodiment of the present invention differs from the wireless access system of the first embodiment of the present invention in that it does not include an authentication server 30. The base stations 400 - 404 differ in configuration from the base stations 200 - 204 in the first embodiment of the present invention. Each of the base stations 400 - 404 has a wireless access service area in which it provides wireless communication with mobile terminals 10. In the second embodiment, base stations 400 and 401 correspond to wireless access service areas 900 and 901, respectively. The mobile terminal 10 and the network 80 are the same as those in the wireless access system in the first embodiment of the present invention.

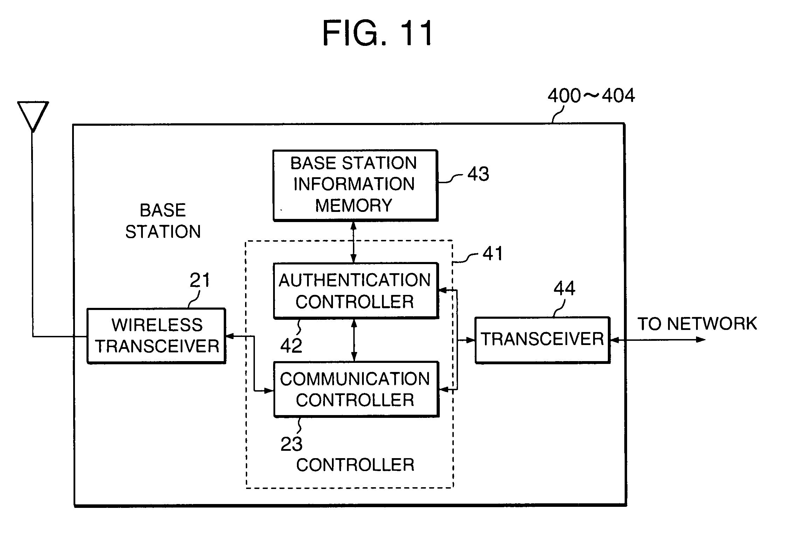

FIG. 11 shows a configuration of each base station 400 - 404. The base station 400 - 404 includes a wireless transceiver 21, a controller 41, base station information memory 43, and a transceiver 44. The transceiver 21 is the same as the transceiver 21 in the base stations 200 - 204 in the first embodiment of the present invention. The controller 41 comprises a communication controller 23 and an authentication controller 42. The communication controller 23 is the same as the communication controller 23 in the base stations 200 - 204 in the first embodiment of the present invention.

The authentication controller 42 is the same as the authentication controller 24 of the base stations 200 - 204 in the first embodiment of the present invention in that it sends and receives signals to and from the communication controller 23 to authenticate mobile terminals 10. However, the authentication controller 42 performs a different authentication process from the authentication process performed by the authentication controller 24. Because no authentication server 30 exists in the second embodiment of the present invention, the authentication controller 42 is responsible for all operations relating to authentication. Specifically, the authentication controller 42 performs authentication based on identification information about mobile terminals 10, issuance and distribution of authentication tickets, and authentication based on authentication tickets. In order for the authentication controller 42 to perform authentication based on identification information, it must have identification information about mobile terminals 10. According to the second embodiment of the present invention, identification information about the mobile terminals 10 are preset in the authentication controller 42 only of a base station 400 among the base stations 400 - 404.

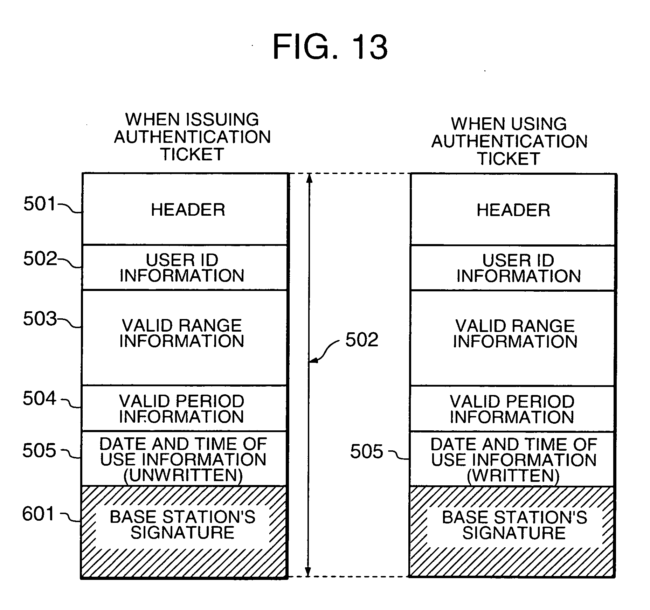

The base station information memory 43 stores preset base station information and sends base station information to the authentication controller 42 in response to a request from the authentication controller 42. Base station information is information for verifying the validity of a base station's signature 601 in an authentication ticket (FIG. 13), which will be described later. According to the present embodiment, each of the base stations 400 - 404 has base station information concerning all of the base stations 400 - 404.

Rather than maintaining identification information about all mobile terminals that can associate to the base stations at each base station, each base station maintains base station information about the other base stations, thereby saving costs/labor for implementing/managing the system.

The transceiver 44 applies processes such as modulation to a signal from the communication controller 23 and sends the signal to the network 80. The transceiver 44 also applies processes such as demodulation to a signal from the network 80 and sends the signal to the communication controller 23.

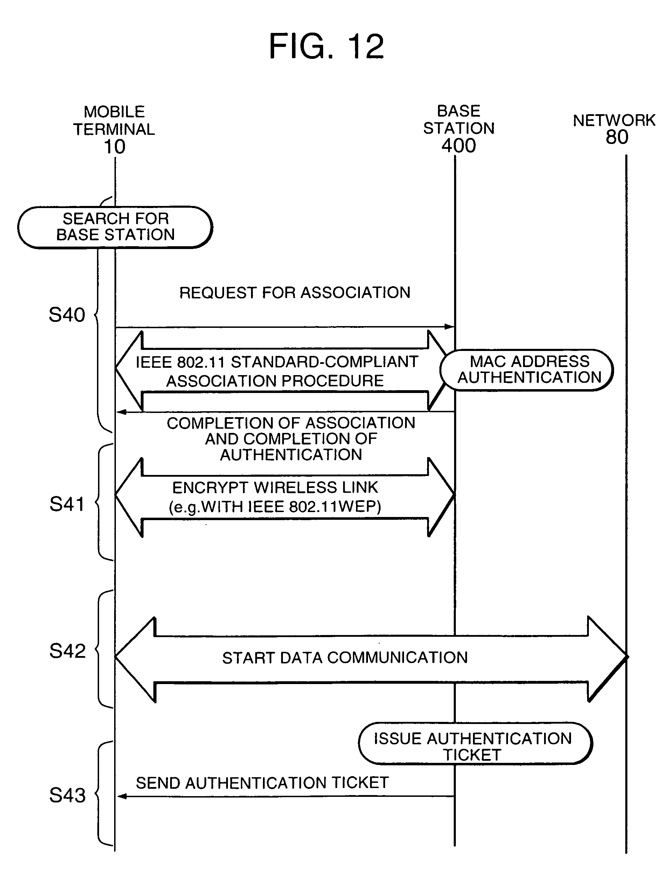

Operations according to the second embodiment of the present invention will be described below. FIG. 12 shows operations in a case where a mobile terminal 10 associated with no base station associates to a base station 400 to start data communication with the network 80.

The communication controller 13 of the mobile terminal 10 searches the base station nearest to the location of the mobile terminal 10 and determines to associates to base station 400. The authentication controller 14 sends an association request to the base station 400. After the authentication controller 14 performs an association procedure with the authentication controller 42 of the base station 400, the mobile terminal 10 associates to the base station 400. The base station search and association procedures described above are performed in compliance with specifications in IEEE 802.11. An authentication process based on identification information such as the MAC address of the mobile terminal 10 is performed between the authentication controller 42 of the base station 400 and the authentication controller 14 of the mobile terminal 10 (S40).

If the authentication based on the identification information succeeds, that is, if the validity of the mobile terminal 10 is verified by the base station 400, the wireless communication link between the mobile terminal 10 and the base station 400 is encrypted. Specifically, the mobile terminal 10 receives a cryptographic key according to a key distribution protocol defined in IEEE 802.1X or WPA or uses a cryptographic key manually preset at the mobile terminal 10 and the base station 400 to encrypt the wireless communication link. WEP encryption specified in IEEE 802.11 can be used as the encryption (S41).

After the completion of the encryption, communication between the mobile terminal 10 and the network 80 is started (S42). After the communication between the mobile terminal 10 and the network 80 is started, an authentication ticket is sent form the base station 400 to the mobile terminal 10. (S43).

FIG. 13 shows a structure of an authentication ticket according to the second embodiment of the present invention. The authentication ticket comprises a header 501, user ID information 502, valid range information 503, valid period information 504, date and time of use information 505, and a base station's signature 601. The authentication ticket according to the second embodiment of the present invention is the same as the authentication ticket of the first embodiment, except that the authentication server signature 506 is changed into the basic station's signature 606 and the passphrase 507 is eliminated. The base station's signature 601 is certification information certifying that the validity of the mobile terminal 10 is certified by the base station that has identification information.

Returning to FIG. 12, distribution and use of the authentication ticket will be described in detail. The authentication controller 42 of the base station 400 sends the authentication ticket in which a signature is set as the base station's signature 601 to the authentication controller 14 of the mobile terminal 10. The authentication controller 14 of the mobile terminal 10 checks the base station's signature 601 in the authentication ticket it received. If the authentication controller determines that the received authentication ticket is a valid one sent from the base station 400, then it stores the authentication ticket in its authentication ticket memory 15. If the authentication controller 14 of the mobile terminal 10 determines that the received authentication ticket is an invalid ticket, then the authentication controller 14 discards it and performs a resend or re-authentication process as appropriate. A case where a valid authentication ticket has been stored in the authentication ticket memory 15 will be described below.

While the authentication ticket is sent after the communication between the mobile terminal 10 and the network 80 is started in the second embodiment of the present invention, an arrangement in which the authentication ticket is sent before the communication is started may also be used. In that case, a secure communication link between the mobile terminal 10 and the base station 400 can be ensured by encrypting the wireless communication link and the authentication ticket is sent to the mobile terminal 10 over the communication link to prevent interruption and unauthorized use of the authentication ticket.

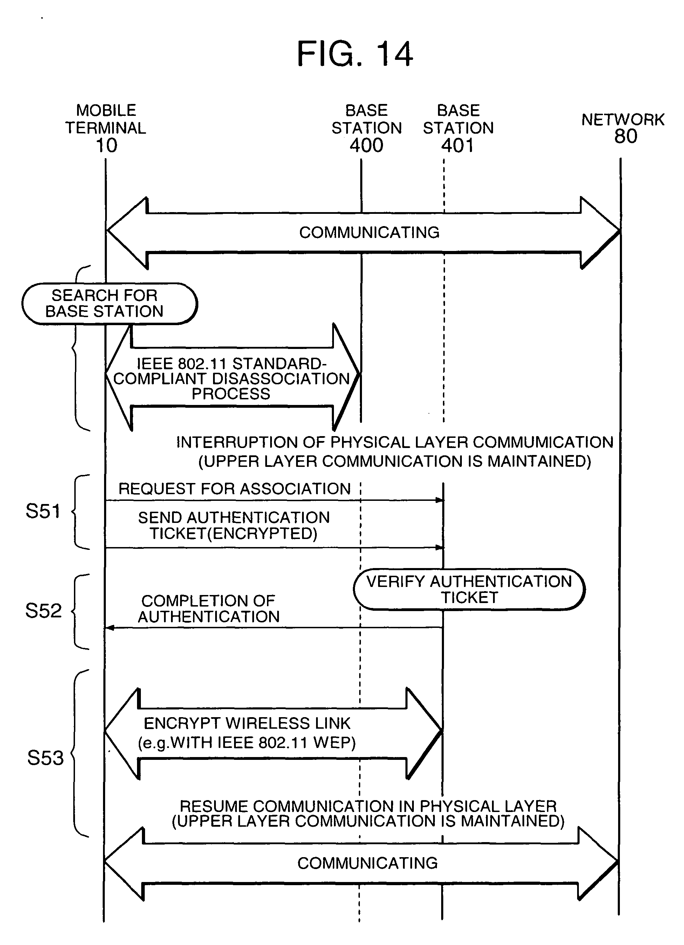

FIG. 14 shows operations for a handover in which the mobile terminal 10 which associates to the base station 400 and communicates with the network 80 switches from the base station with which it is associated to another base station 401 as the mobile terminal moves.

As shown in FIG. 10, the mobile terminal 10 moves while maintaining communication with the network 80. When the mobile terminal 10 comes closer to a radio wave reception limit point of the base station 400 with which it is currently associated, that is, to a boundary of wireless access service area 900, the mobile terminal 10 performs a base station search again and finds the nearest base station 401. The mobile terminal 10 then performs a handover to switch association from base station 400 to base station 401 as it moves from wireless access area 900 to wireless access area 901.

Specifically, the communication controller 13 of the mobile terminal 10 knows that it is in close proximity to a boundary of wireless access area 900 froma drop in the intensity of a received radio wave or a rise in signal error rate. Furthermore, the mobile terminal 10 searches for a base station and finds the nearest base station 401. Then, the authentication controller 14 of the mobile terminal 10 accomplishes a disassociation process with the authentication controller 42 of base station 400 when it moves from the wireless access area 900 to wireless access area 901 (S50). The base station search and disassociation are performed in compliance with specifications in IEEE 802.11. At the time point of the completion of the disassociation, communication between the mobile terminal 10 and the network 80 is still continued in an upper layer of the communication protocol but the communication is interrupted in the physical layer of the communication protocol.

Then the authentication controller 14 sends an association request to the authentication controller 42 of the base station 401. However, the authentication controller 42 of the base station 401 cannot permit communication between the mobile terminal 10 and the network 80 because it does not have identification information about the mobile terminal 10.

Therefore, the authentication controller 14 of the mobile terminal 10 sends the authentication ticket to the authentication controller 42 of the base station 401 (S51). The authentication controller 42 of the base station 401 receives the authentication ticket sent from the mobile terminal 10 and checks the valid range information 503 and the valid period information 504 in the authentication ticket it received to determine whether the authentication ticket is valid or not. The authentication controller 42 of the base station 401 also checks the base station's signature 601 in the received authentication ticket to determine whether or not the authentication ticket is a valid one issued by the base station 400 that has identification information about the mobile terminal 10. Furthermore, the authentication controller 42 of the base station 401 checks the user ID information 502 and the use date and time information 505 in the received authentication ticket to determine whether or not he authentication ticket is used unauthorizedly. Because the authentication ticket is sent without encryption, it can be obtained and used by a malicious person that is not the authorized user of the mobile terminal 10. Therefore such an unauthorizedly used authentication ticket must be precluded. Specifically, the ID information, for example the MAC address, of the mobile terminal 10 which has been sent from the mobile terminal 10 with the association request described above is compared with the user ID information 502 to determine whether the user of the authentication ticket matches the mobile terminal 10 trying to associate to the base station 401. If they do not match, it can be determined that this is an unauthorized use. Furthermore, the date and time at which the authentication ticket has been received can be compared with the date and time of use information 505 to determine whether or not this is an unauthorized use. That is, if the elapsed time between the date and time set in the date and time of use information 505 and the reception of the authentication ticket is not within the range of delay in wireless transmission, it can be determined that this is an unauthorized use by an unauthorized third party who intercepted it (S52).

If it is determined through the procedures described above that the authentication ticket has been used within the valid period and valid range, issued by the base station 400, and used by an authorized user, that is, if it is determined that the authentication ticket is entirely valid, then the wireless communication link between the mobile terminal 10 and base station 401 is encrypted. Specifically, the mobile terminal 10 receives a cryptographic key according to a key distribution protocol defined in IEEE 802.1X or WPA or uses a cryptographic key manually preset in the mobile terminal 10 and base station 401 to encrypt the wireless communication link. For example, the WEP encryption specified in IEEE 802.11 may be used for the encryption. After the completion of the encryption, the authentication controller 42 of base station 401 sends a notification indicating that communication with the network 80 is permitted to the authentication controller 14 of the mobile terminal 10. At the same time, the communication controller 23 of base station 401 opens a communication port between the mobile terminal 10 and the network 80. The mobile terminal 10 that received the notification of permission of the communication resumes the communication with the network in the physical layer (S53). It should be noted that because the interruption of communication in the physical layer in the period from step S50 to step S53 is short, communication in the upper layer has been maintained.

If the validity of the authentication ticket cannot be verified, then association of the mobile terminal 10 is not permitted and the communication is not resumed.

The mobile terminal 10 performs steps S50 to S53 described above each time it performs a handover as it moves.

The use of an authentication ticket during a handover in which a mobile terminal 10 changes a base station has been described above. The authentication process shown in FIG. 14 in which an authentication ticket is used also applicable to a case where a mobile terminal 10 associated with no base station associates to any of the base stations. For example, consider a case where a mobile terminal 10 associated with bases station 400 has disassociated from base station 400 after an authentication ticket is sent to the mobile terminal 10. If the mobile terminal re-associates to base station 400, the mobile terminal 10 can start communication with the network 80 by performing the authentication process shown in FIG. 14, instead of performing an authentication process based on identification information.

While only one base station 400 has identification information about mobile terminals 10 in the second embodiment of the present invention, an arrangement can be used in which more than one base station has the identification information.

While a mobile terminal 10 that is associated with no base station first associates to the base station 400 that has identification information in the second embodiment of the present invention, a mobile terminal 10 also may first associate to a base station that does not have identification information. In that case, the mobile terminal 10 may perform an authentication process based on its identification information with the base station 400 having the identification information via the base station to which it is associating.

While a wireless LAN access system is used as a wireless access system in the second embodiment of the present invention, any other systems can also be used that, like the system described above, include mobile terminals, base stations, and a network. For example, systems such as mobile phone communication systems and PHS (Personal Handyphone System) communication system can be used.

While the network 80 is a cable network in the first and second embodiments of the present invention, it may be a wireless network or a network that includes both cable and wireless segments.

While five base stations are provided in the system in the first and second embodiments of the present invention, a wireless access system including less or more than five base stations may be built.

While the operations for associating to a base station is performed in compliance with specifications in IEEE 802.11 in the first and second embodiments of the present invention, the association operations do not necessarily have to be in compliance with specifications in IEEE 802.11. Any other operations may be used that allow a mobile terminal to shift to a state in which it can communicate with a base station. Similarly, disassociation operations do not necessarily have to be in compliance with specifications in IEEE 802.11. Any other operations may be used that allow a mobile terminal to disassociate from a base station. For example, if a mobile phone communication system or a PHS communication system mentioned above is used, association and disassociation appropriate for those systems may be used.

While a mobile terminal is associated with only one base station in the first and second embodiments of the present invention, an implementation in which a mobile terminal is simultaneously associated with more than one base station at may be used. For example, an implementation like a soft handover in a CDMA communication system can be used. In that case, an implementation may be used in which a mobile terminal that has associated to a new base station performs an authentication process with the new base station based on an authentication ticket or performs an authentication process with an authentication server or another base station through the new base station while maintaining communication with another base station.

While each base station has one corresponding wireless access service area in the first and second embodiments of the present invention, an implementation may be used in which each base station has more than one wireless access service area. For example, an implementation may be used in which each base station has a plurality of directional antennas and has wireless access service areas covered by those directional antennas. In that case, a mobile terminal performs a handover for switching between directional antennas to which it associates as the mobile terminal moves. During the handover, the mobile terminal can perform an authentication process similar to the authentication process in a handover between base stations.

While the first and second embodiments have been described with respect to one mobile terminal 10, an implementation may be used in which a plurality of mobile terminals are associated with one base station.

According to the present invention, a wireless communication device/mobile terminal can initiate a communication in a shorter time when associating to a base station.

According to the present invention, authentication processing time can be reduced while ensuring a high security level.

According to the present invention, the level of security can be set in accordance with the size and use of the system.

According to the present invention, the present invention can reduce the time required for authentication without extra costs/labor for implementing/managing the system while ensuring the security.

According to the present invention, the system can be improved at low costs while maintaining compatibility with an existing system.

According to the present invention, a quality deterioration of communication in an upper layer can be prevented while maintaining a high security level. This is especially effective in communication in which data such as audio and video that requires continuity and real-time processing is handled.

According to the present invention, user convenience can be increased when an authorized wireless communication device/mobile terminal re-associates to the base station.

It will be obvious to those having skill in the art that many changes may be made in the above-described details of the preferred embodiments of the present invention. The scope of the present invention, therefore, should be determined by the following claims.

## Claims

1. A control method for a communication system, the communication system comprising a wireless communication device, plural base stations, an authentication device, and a network, any of the plural base stations linking the wireless communication device and the network, said control method comprising:
performing a first authentication process between the wireless communication device and the authentication device, the first authentication process being necessary for initiating a communication between the wireless communication device and the network;
initiating the communication between the wireless communication device and the network device via any of the plural base stations;
sending an authentication ticket from the authentication device to the wireless communication device, the authentication ticket indicating that the wireless communication device is permitted to communicate with the network based on a result of the first authentication process;
storing the authentication ticket in the wireless communication device;
sending the authentication ticket from the wireless communication device to any of the plural base stations in the event that the wireless communication device resumes the communication with the network after interrupting the communication with the network;
performing, at any of the plural base stations, a second authentication process based on the authentication ticket sent from the wireless communication device, the second authentication process being different from the first authentication process; and
resuming the communication between the wireless communication device and the network based on a result of the second authentication process.

2. A wireless communication device in a communication system, the communication system comprising a first base station and a network, the first base station linking a communication between said wireless communication device and the network, said wireless communication device comprising:
a controller which receives authentication information from the first base station, the authentication information being based on a first authentication process, the first authentication process being necessary for said wireless communication device to initiate a communication with the network via the first base station; and
a memory coupled to said controller, which stores the authentication information received by said controller.

3. A wireless communication device according to claim 2, wherein said controller initiates the first authentication process in the event that said memory does not store the authentication information which is valid and initiates a second authentication process in the event that said memory stores the authentication information which is valid, the second authentication process is different from the first authentication process, and said controller initiates the communication with the network based on a result of one of the first and second authentication process.

4. A wireless communication device according to claim 3, wherein said controller sends the authentication information to the first base station in order to initiate the second authentication process.

5. A wireless communication device according to claim 4, wherein said controller initiates the first authentication process during the communication with the network initiated based on the result of the second authentication process.

6. A wireless communication device according to claim 4, wherein said authentication information comprises at least one of identification information of said wireless communication device, a valid period of the authentication information, valid range information indicating a range in which the authentication information is valid, and time information indicating a time when said controller sent the authentication information to the first base station.

7. A wireless communication device according to claim 4, wherein the authentication information comprises encryption information, and said controller encrypts the authentication information by using the encryption information and sends the encrypted authentication information to the first base station.

8. A wireless communication device according to claim 4, wherein the first authentication process is performed between said controller and an authentication device communicating with the first base station, and said controller receives the authentication information from the authentication device via the first base station.

9. A wireless communication device according to claim 8, wherein the authentication information comprises certification information set by the authentication device.

10. A wireless communication device according to claim 4, wherein the first authentication process is performed between said controller and the first base station.

11. A wireless communication device according to claim 10, wherein the authentication information comprises certification information set by the first base station.

12. A wireless communication device according to claim 4, wherein said controller initiates the first authentication process in the event that the authentication information stored in said memory becomes invalid while said controller communicate with the network.

13. A wireless communication device according to claim 3, wherein said controller sands the authentication information to a second base stations in order to initiate the second authentication process, the second base station is in the communication system and is different from the first base station, the second base station links a communication between said wireless communication device and the network.

14. A wireless communication device according to claim 13, wherein said controller initiates the first authentication process during the communication with the network initiated based on the result of the second authentication process.

15. A wireless communication device according to claim 13, wherein said authentication information comprises at least one of identification information of said wireless communication device, a valid period of the authentication information, valid range information indicating a range in which the authentication information is valid, and the time information indicating a time when said controller sent the authentication information to the second base station.

16. A wireless communication device according to claim 13, wherein the authentication information comprises encryption information, and said controller encrypts the authentication information by using the encryption information and sends the encrypted authentication information to the second base station.

17. A wireless communication device according to claim 13, wherein the first authentication process is performed between said controller and an authentication device communicating with the first base station, and said controller receives the authentication information from the authentication device via the first base station.

18. A wireless communication device according to claim 13, the first authentication process is performed between said controller and the first base station.

19. A wireless communication device in a communication system, the communication system comprising a network and a base station, the base station linking a communication between said wireless communication device and the network, said wireless communication device comprising:
a controlling means for receiving authentication information from the base station, the authentication information being based on a first authentication process, the first authentication process being necessary for said wireless communication device to initiate a communication with the network via the first base station; and
a storing means for storing the authentication information received by said wireless transceiver.

20. Abase station in a communication system, the communication system comprising a network and a wireless communication device, said base station linking a communication between the wireless communication device and the network, said base station comprising:
a wireless transceiver which communicates with the wireless communication device via wireless communication; and
a controller coupled to said wireless transceiver, which sends an authentication information to the wireless communication device, the authentication information being to be stored in wireless communication device and being based on a first authentication process, the first authentication process being necessary for the wireless communication device to initiate the communication between the wireless communication device and the network via said base station.

21. A base station according to claim 20, wherein the first authentication process is initiated in the event that the wireless communication device initiates a communication with the network without sending authentication information which is valid to said base station, said controller initiates a second authentication process in the event that the wireless communication device initiate the communication with the network by sending the authentication information which is valid to said base station, and said controller permits the wireless communication device to communicate with the network based on a result of one of the first and second authentication process.

22. A base station according to claim 21, wherein said controller receives the authentication information stored in the wireless communication device form the wireless communication device, and said controller performs the second authentication process by verifying the authentication information received from the wireless communication device.

23. A base station according to claim 22, further comprising a transceiver which communicates with an authentication device, wherein the first authentication process is performed between the wireless communication device and the authentication device via said base station, and the authentication information is sent to the wireless communication device from the authentication device via said base station.

24. A base station according to claim 23, wherein the authentication information comprises at least one of identification information of the wireless communication device, avalidperiodoftheauthenticationinformation, valid range information indicating a range in which the authentication information is valid, the time information indicating a time when the wireless communication device sent the authentication information to said base station, and certification information set by the authentication device.

25. A base station according to claim 22, wherein said controller performs the first authentication process with the wireless communication device.

26. A base station according to claim 25, wherein the authentication information comprises at least one of identification information of said wireless communication device, a validperiod of the authentication information, valid range information indicating a range in which the authentication information is valid, the time information indicating a time when the wireless communication sent the authentication information to said base station, and certification information set by said controller.

27. A base station in a communication system, the communication system comprising a network and a wireless communication device, said base station linking a communication between the wireless communication device and the network, said base station comprising:
a wireless transmission and reception means for communicating with the wireless communication device via wireless communication; and
a controlling means for sending authentication information to the wireless communication device, the authentication information being to be stored in wireless communication device and being based on the first authentication process, the first authentication process being necessary for the wireless communication device to initiate the communication between the wireless communication device and the network via said base station.

28. An authentication device in a communication system, the communication system comprising a network, a base station and a wireless communication device, said base station linking a communication between the wireless communication device and the network, said authentication device comprising:
a transceiver which communicates with the base station; and
a controller coupled to said transceiver, which sends authentication information to the wireless communication device via the base station, the authentication information being to be stored in the wireless communication device and being based on the first authentication process, the first authentication process is necessary for the wireless communication device to initiate the communication with the network via the base station.

29. An authentication device according to claim 28, wherein the authentication information stored in the wireless communication device is sent to the base station from the wireless communication device in the event that the wireless communication device initiates a communication with the network, and the authentication information sent to the bases station is to be a basis of second authentication process between the wireless communication device and the base station.

30. An authentication device according to claim 29, wherein the authentication information comprises at least one of identification information of said wireless communication device, a valid period of the authentication information, valid range information indicating a range in which the authentication information is valid, the time information indicating a time when the wireless communication devise sent the authentication information to the base station, and certification information set by said controller.

31. An authentication device in a communication system, the communication system comprising a network, a base station and a wireless communication device, said base station linking a communication between the wireless communication device and the network, said authentication device comprising:
a transmission and reception means for communicating with the base station; and
a controlling means for sending authentication information to the wireless communication device via the base station, the authentication information being to be stored in the wireless communication device and being based on the first authentication process, the first authentication process is necessary for the wireless communication device to initiate the communication with the network via the base station.

32. A communication system comprising a wireless communication device and a base station,
said wireless communication device comprising:
a first controller which receives authentication information from the base station, the authentication information being based on a first authentication process,thefirst authentication process being necessary for said wireless communication device to initiate a communication with the network via the base station; and
a memory coupled to said controller, said memory storing the authentication information received by said controller, and said base station linking the communication between said wireless communication device and the network, said base station comprising:
a second controller coupled to said wireless transceiver, said second controller sending the authentication information to said wireless communication device.

33. A communication system according to claim 32, further comprising an authentication device communicating with said base station, said authentication device comprising:
a third controller which sends the authentication information to said wireless communication device via said base station.

34. A communication system according to claim 33, wherein the first authentication process is initiated in the event that said wireless communication device initiates a communication with the network without sending authentication information which is valid to said base station, said second controller in said base station initiates a second authentication process in the event that said wireless communication device initiates the communication with the network by sending the authentication information which is valid to saidbase station, and said second controller in said base station permits the wireless communication device to communicate with the network based on one of a result of the first and second authentication process.

35. A control method for a communication system, the communication system comprising a wireless communication device, a base station and a network, the base station linking a communication between the wireless communication device and the network, said control method comprising:
receiving authentication information based on a first authentication process from the base station, the first authentication process being necessary for initiating the communication between the wireless communication device and the network via the base station; and
storing the authentication information received from the base station.

36. A control method according to claim 35, further comprising:
initiating a second authentication process between the wireless communication device and the base station in the event that the wireless communication device initiate the communication with the network by sending the authentication information which is valid to said base station; and
permitting the wireless communication device to communicate with the network based on a result of one of the first and second authentication process, wherein the first authentication process is initiated in the in the event that the wireless communication device initiates a communication with the network without sending the authentication information to the base station.

37. A control method according to claim 36, further comprising
sending the authentication information from an authentication device to the wireless communication device via the base station, wherein the first authentication process is performed between the authentication device and the wireless communication device.
